# EUROPÄISCHE PATENTSCHRIFT

(11) **EP 3 828 655 B1**
(45) Veröffentlichungstag und Bekanntmachung des Hinweises auf die Patenterteilung: **18.05.2022**
(21) Anmeldenummer: 19212213.3
(22) Anmeldetag: 28.11.2019
(51) Int. Cl.: G05B 23/02, G05B 17/02

(54) **VERFAHREN UND VORRICHTUNG ZUR FEHLERURSACHENBESTIMMUNG EINES FEHLERS IN EINER ELEKTRISCHEN SCHALTUNG**
METHOD AND DEVICE FOR DETECTING THE CAUSE OF AN ERROR IN AN ELECTRICAL CIRCUIT
PROCÉDÉ ET DISPOSITIF DE DÉTERMINATION DES CAUSES D'UNE DÉFAILLANCE DANS UN CIRCUIT ÉLECTRIQUE

(43) Veröffentlichungstag der Anmeldung: 02.06.2021
(73) Patentinhaber: Siemens Aktiengesellschaft, 80333 München (DE)
(72) Erfinder: Botero Halblaub, Andrés, 85614 Kirchseeon (DE); Fischer, Jan, 81541 München (DE); Herz, Matthias, 91301 Forchheim (DE); Oswald, Wilhelm, 91088 Bubenreuth (DE); Wincheringer, Christoph, 81369 München (DE)

(56) Entgegenhaltungen:
- EP-A1- 3 173 991
- WO-A2-2010/077830

## Beschreibung

Die Erfindung betrifft ein computerimplementiertes Verfahren und eine Vorrichtung zur Fehlerursachenbestimmung eines Fehlers in einer elektrischen Schaltung mittels eines graphbasierten Schaltplansimulationsmodells.

Während des Betriebs von Werkzeugmaschinen kann es häufig zu Maschinenausfällen kommen, bei denen die Ausfallursache in deren elektrischen Schaltung liegt. Ein Ausfall kann beispielsweise durch einen Kurzschluss oder einen Kabelbruch hervorgerufen werden. Aufgrund der Komplexität einer elektrischen Schaltung einer üblichen Werkzeugmaschine kann jedoch der genaue Ort und der logische und/oder zeitliche Zusammenhang der Fehlerursache oft nur schwer bestimmt werden. Eine Fehlerursachenbestimmung basiert in der Regel auf Katalogen, in denen mögliche Fehlerursachen in Zusammenhang mit beobachteten Fehlerphänomenen aufgelistet sind und/oder auf einem Vergleich der fehlerhaften Werkzeugmaschine mit einem baugleichen Modell. Diese Ansätze können aufwändig sein oder zu einer langen Stillstandzeit der betroffenen Maschine führen. EP3173991 offenbart ein System zur automatischen Erkennung von Ähnlichkeiten zwischen Störungen in einem Netzwerk.

Es ist daher die Aufgabe der Erfindung, die Fehlerursachensuche beim Auftreten eines Fehlers in einer elektrischen Schaltung zu verbessern.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt. Gemäß einem ersten Aspekt betrifft die Erfindung ein computerimplementiertes Verfahren zur Fehlerursachenbestimmung eines Fehlers in einer elektrischen Schaltung, umfassend die Verfahrensschritte:
a) Einlesen eines graphbasierten Schaltplansimulationsmodells der elektrischen Schaltung, wobei im graphbasierten Schaltplansimulationsmodell elektrische Anschlusspunkte von Schaltungskomponenten als Graphknoten und elektrische Verbindungen als Graphkanten modelliert sind,
b) Simulieren eines Fehlers in der elektrischen Schaltung mittels des graphbasierten Schaltplansimulationsmodells, wobei
   - eine Graphkante im graphbasierten Schaltplansimulationsmodell hinzugefügt oder entfernt wird,
   - resultierende Zusammenhangskomponenten anhand des modifizierten graphbasierten Schaltplansimulationsmodells und jeweilige Potentialwerte und/oder Phasenwerte der Graphknoten der resultierenden Zusammenhangskomponenten ermittelt werden,
   - und wobei auf Basis der ermittelten Potentialwerte und/oder Phasenwerte der Graphknoten das Schaltverhalten der elektrischen Schaltung durch weiteres Hinzufügen und/oder Entfernen von mindestens einer weiteren Graphkante abgebildet wird,
c) Ausgeben von resultierenden Potential- und/oder Phasenwerten vorgegebener Graphknoten als simulierte Ausgangssignale,
d) Vergleichen der simulierten Ausgangssignale mit bereitgestellten Referenzausgangssignalen der elektrischen Schaltung und
e) Ausgeben der den Fehler entsprechenden Fehlerursache, wenn die simulierten Ausgangssignale mit den Referenzausgangssignalen übereinstimmen.

Es ist ein Vorteil der vorliegenden Erfindung, dass eine schnelle und aufwandsarme computergestützte Simulation einer elektrischen Schaltung eines technischen Systems zur Fehleranalyse durchgeführt werden kann. Die graphbasierte Schaltplansimulation ist insbesondere effizient und ermöglicht, einen Schaltvorgang der elektrischen Schaltung in Echtzeit oder nahezu in Echtzeit zu simulieren. Dies ermöglicht das Koppeln des graphbasierten Simulationsmodells der elektrischen Schaltung mit der echten Hardware Steuerung.

Außerdem kann effizient eine große Anzahl an Fehlerursachen und deren Auswirkungen simuliert werden, so dass beispielsweise große Fehlerdatenbanken aufgebaut werden können. Das graphbasierte Simulationsmodell lässt sich insbesondere leicht aus bestehenden Zeichnungsplänen des Schaltplans generieren, so dass ein Modellierungsaufwand reduziert werden kann. Das graphbasierte Simulationsmodell ermöglicht beispielsweise außerdem, eine propositionale Logik zur abstrakten Abbildung einer Steuerungslogik zu modellieren und effizient auszuführen.

Die computergestützte Simulation eines Schaltvorgangs unter Berücksichtigung eines induzierten Fehlers wird auf Basis des graphbasierten Schaltplansimulationsmodells der elektrischen Schaltung durchgeführt. Ausgehend von einem oder mehreren Ausgangspotentialniveaus der elektrischen Schaltung kann auf einfach Weise, nämlich durch Hinzufügen und/oder Entfernen mindestens einer Graphkante, ein Schaltvorgang simuliert werden. Die Schaltplanlogik wird insbesondere durch die iterative Bestimmung der Potentialniveaus abgebildet.

In einer Ausführungsform des computerimplementierten Verfahrens können, wenn die simulierten Ausgangssignale von den Referenzausgangssignalen abweichen, iterativ weitere Fehler simuliert werden bis die simulierten Ausgangssignale mit den Referenzausgangssignalen übereinstimmen.

Zur Fehlerursachensuche können beispielsweise eine Vielzahl von unterschiedlichen Fehlern simuliert werden bis die simulierten Ausgangssignale mit den Referenzausgangssignalen der fehlerhaften elektrischen Schaltung übereinstimmen.

In einer Ausführungsform des computerimplementierten Verfahrens kann einer Graphkante und/oder einem Graphknoten mindestens ein Attribut zugeordnet werden.

Ein Attribut kann beispielsweise ein Wert des elektrischen Potentials oder der Phase sein.

In einer Ausführungsform des computerimplementierten Verfahrens kann eine Zusammenhangskomponente mittels eines Union-Find-Algorithmus ermittelt werden.

Der bekannte Union-Find-Algorithmus ermöglicht insbesondere eine effiziente und schnelle Bestimmung der Zusammenhangskomponenten des Graphen, d.h. des graphbasierten Schaltplansimulationsmodells und somit der Bestimmung von Potentialniveaus.

In einer Ausführungsform des computerimplementierten Verfahrens können die Attribute zu Potential- und Phasenwerten weiterer Graphknoten einer Zusammenhangskomponente auf Basis eines Attributs eines Graphknotens der entsprechenden Zusammenhangskomponente ermittelt werden.

In einer Ausführungsform des computerimplementierten Verfahrens kann ein jeweiliger Ausgangspotentialwert des eingelesenen graphbasierten Schaltplansimulationsmodells auf Basis eines gemessenen Eingangssignals der elektrischen Schaltung in einem vorgegebenen Normalzustand der elektrischen Schaltung eingestellt werden.

Zur Fehlerursachensuche ist es vorteilhaft, die computergestützte Simulation auf Basis eines Normalzustands, vorzugsweise eines fehlerfreien Zustands, der elektrischen Schaltung durchzuführen.

In einer Ausführungsform des computerimplementierten Verfahrens können die Schaltlogik, die Schaltkontakte und/oder die Schaltungskomponenten der elektrischen Schaltung im graphbasierten Schaltplansimulationsmodell hierarchisch modelliert werden.

Insbesondere kann eine Schaltungskomponente, wie z.B. ein Relais mit Spule und Schaltkontakten, als eine Gruppe von Graphkanten und Graphknoten modelliert werden. Dies ermöglicht beispielsweise ein einfaches Entfernen und/oder Hinzufügen von Schaltungskomponenten. Die Schaltlogik, d.h. insbesondere die Abhängigkeit einzelner Schaltungskomponenten voneinander, kann insbesondere innerhalb einer solchen Gruppe abgebildet werden. Beispielsweise hängen Schaltkontake als bedingte Graphkanten von der Spulenspannung und somit der Potentialdifferenz der beiden Graphknoten der Spulenanschlüsse ab.

Gemäß einem zweiten Aspekt betrifft die Erfindung eine Vorrichtung zur Fehlerursachenbestimmung eines Fehlers in einer elektrischen Schaltung, umfassend mindestens einen Prozessor, wobei die Vorrichtung derart eingerichtet ist, die Schritte des erfindungsgemäßen Verfahrens durchzuführen.

In einer Ausführungsform kann die Vorrichtung mit einer realen oder simulierten Steuerung gekoppelt sein, wobei die Ausgangssignale der Simulation an die reale Steuerung oder simulierte übermittelt werden.

Die effiziente graphbasierte Simulation ermöglicht beispielsweise eine Kopplung an die reale Steuerung einer Werkzeugmaschine. So kann beispielsweise ein Hardware-in-the-Loop-Ansatz realisiert werden. Alternativ kann die graphbasierte Simulation mit einer simulierten Steuerung gekoppelt werden. Die Ausgangssignale der Steuerung können in der Simulation verarbeitet werden.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1: ein Ablaufdiagramm eines computerimplementierten Verfahrens zur Fehlerursachenbestimmung eines Fehlers in einer elektrischen Schaltung;
- Fig. 2: eine schematische Darstellung eines graphbasierten Schaltplansimulationsmodell; und
- Fig. 3: eine schematische Darstellung einer Vorrichtung zur Fehlerursachenbestimmung eines Fehlers in einer elektrischen Schaltung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

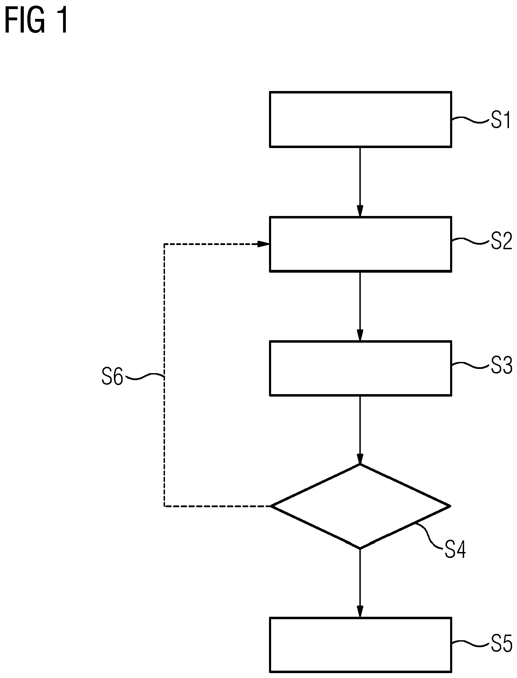

Figur 1 zeigt ein Ablaufdiagramm eines computerimplementierten Verfahrens zur Fehlerursachenbestimmung eines Fehlers in einer realen elektrischen Schaltung. Beispielsweise handelt es sich um einen Defekt in der elektrischen Schaltung einer Werkzeugmaschine. Die Ursache und/oder Lokalisierung des Defekts kann mittels des computerimplementierten Verfahrens effizient beispielsweise parallel zum Betrieb der realen Werkzeugmaschine bestimmt werden.

Im ersten Schritt S1 des computerimplementierten Verfahrens wird ein graphbasiertes Schaltplansimulationsmodell der elektrischen Schaltung eingelesen. Das graphbasierte Schaltplansimulationsmodell kann beispielsweise aus Daten eines Schaltplans oder einer Elektrokonstruktion generiert sein. Das graphbasierte Schaltplansimulationsmodell bildet den Schaltplan eines technischen Systems, z.B. einer Werkzeugmaschine, ab.

Das graphbasierte Schaltplansimulationsmodell ist vorzugsweise derart konfiguriert, dass elektrische Anschlusspunkte der Schaltungskomponenten der realen Schaltung als Graphknoten und elektrische Verbindungen als Graphkanten modelliert sind. Graphknoten können beispielsweise durch einen elektrischen Potentialwert, und Phasenwert im Fall von Wechselstrom, gekennzeichnet sein. Die Graphknoten, die über eine gemeinsame Graphkante verbunden sind, weisen insbesondere denselben Phasen- bzw. Potentialwert auf.

Ein Potentialwert bzw. Phasenwert an einer Schaltungskomponente in der realen Schaltung kann sich beispielsweise durch einen Schaltvorgang oder einen Schritt eines Schaltvorgangs oder durch einen auftretenden Fehler ändern. Dies kann, wie nachfolgend erläutert, mittels des graphbasierten Schaltplansimulationsmodells abgebildet werden.

Das graphbasierte Schaltplansimulationsmodell wird zunächst vorzugsweise derart eingestellt, dass Ausgangspotentialwerte einem Normalzustand, d.h. fehlerfreien Zustand, der elektrischen Schaltung entsprechen. Beispielsweise können die Ausgangspotentialwerte von Graphknoten auf Basis gemessener Eingangssignale der elektrischen Schaltung im Normalzustand eingestellt werden.

Den Graphkanten und/oder Graphknoten können jeweils Attribute zugeordnet sein. Ein Attribut kann beispielsweise ein Potentialwert oder ein Phasenwert sein. So kann beispielsweise anhand der jeweils zugeordneten Attribute die an einer Schaltungskomponente anliegende Spannung als Differenz der auf dieselbe Bezugsmasse bezogenen Potentialwerte der Graphknoten dieser Schaltungskomponente ermittelt werden.

Anhand des graphbasierten Schaltplansimulationsmodells werden Zusammenhangskomponenten des Graphen ermittelt. Die Ermittlung kann vorzugsweise mittels des Union-Find-Algorithmus erfolgen. Eine Zusammenhangskomponente stellt eine Menge von Graphknoten dar, wobei jeweils zwei beliebige dieser Graphknoten über einen Weg, d.h. mindestens eine Graphkante bzw. eine Folge von Graphkanten, verbunden sind. Für die Graphknoten einer Zusammenhangskomponente können jeweils Potentialwerte ermittelt werden. Eine Zusammenhangskomponente beschreibt vorzugsweise ein Potentialniveau im Schaltplan.

Beispielsweise können anhand des eingelesenen graphbasierten Schaltplansimulationsmodells Potentialwerte der Graphknoten der jeweils ermittelten Zusammenhangskomponenten als Ausgangspotentialwerte ermittelt werden. Eine Simulation eines Schaltvorgangs bzw. Schaltverhaltens der elektrischen Schaltung mittels des graphbasierten Schaltplansimulationsmodells kann ausgehend von diesen ermittelten Zusammenhangskomponenten und jeweils ermittelten Ausgangspotentialwerte erfolgen.

Im nächsten Schritt S2 wird ein Fehler in der elektrischen Schaltung, wie z.B. ein Kabelbruch an einem vorgegebenen Ort, mittels des graphbasierten Schaltplansimulationsmodells simuliert. In anderen Worten, es wird ein Fehler in der elektrischen Schaltung modelliert und ein Schaltverhalten der elektrischen Schaltung unter Berücksichtigung dieses Fehlers simuliert.

Dazu wird der Fehler durch Löschen einer vorhandenen Graphkante und/oder Speichern bzw. Hinzufügen einer neuen Graphkante im graphbasierten Schaltplansimulationsmodell modelliert. Beispielsweise kann ein Kabelbruch durch Entfernen einer Graphkante modelliert werden. Ein Kurzschluss kann beispielsweise durch Hinzufügen einer zusätzlichen Graphkante modelliert werden. So wird das graphbasierte Schaltplansimulationsmodell für die Fehlersimulation modifiziert. Weitere Schritte werden dann auf Basis dieses modifizierten graphbasierten Schaltplansimulationsmodell durchgeführt.

Anschließend werden anhand des modifizierten graphbasierten Schaltplansimulationsmodells Zusammenhangskomponenten mittels des Union-Find-Algorithmus berechnet. Diese resultierenden Zusammenhangskomponenten ergeben sich insbesondere durch die Modifikation des Schaltplansimulationsmodells. Für diese neu berechneten Zusammenhangskomponenten werden Potentialwerte und/oder Phasenwerte der Graphknoten dieser Zusammenhangskomponenten ermittelt. Auf Basis der ermittelten Potentialwerte und/oder Phasenwerte der Graphknoten wird das Schaltverhalten bzw. die Schaltlogik der elektrischen Schaltung ausgewertet, wobei mindestens eine weitere Graphkante hinzugefügt oder gelöscht wird.

Beispielsweise kann für das Öffnen eines Schaltkontaktes durch die Schaltlogik, z.B. ein Öffner-Kontaktes eines aufgrund der Schaltungslogik anziehenden Relais oder ein Schließer-Kontakt eines aufgrund der Schaltungslogik abfallenden Relais, eine Graphkante im graphbasierten Schaltplansimulationsmodell entfernt und für das Schließen eines Schaltkontaktes durch die Schaltlogik, z.B. ein Schließer-Kontaktes eines anziehenden Relais oder ein Öffner-Kontakt eines abfallenden Relais, eine Graphkante im graphbasierten Schaltplansimulationsmodell hinzugefügt werden. Die Integration der Schaltlogik in der Simulation kann über logische Bausteine erfolgen, die das Hinzufügen und Entfernen von Graphkanten in Abhängigkeit von Potentialniveaus an anderen Stellen im Graphen durchführen, z.B. um das Verhalten eines Schützes zu simulieren. Da es sich hier um einfache Logikbausteine handelt, wird die Geschwindigkeit der Simulation dadurch nicht beeinträchtigt.

Die Potentialwerte der Graphknoten einer Zusammenhangskomponente können beispielsweise alle denselben Potentialwert aufweisen. In anderen Worten, sofern mindestens ein Graphknoten einer Zusammenhangskomponente als Attribut einen Potentialwert besitzt und alle anderen Graphknoten der Zusammenhangskomponente entweder keinen oder denselben Potentialwert wie dieser Graphknoten, und soweit vorhanden, denselben Phasenwert wie dieser Graphknoten als Attribut aufweisen, definiert das Attribut des Potentialwerts von diesem Graphknoten und, soweit vorhanden, das Attribut des der Phasenwerts von diesem Graphknoten die entsprechenden Potentialwerte und ggf. die Phasenwerte der jeweiligen Zusammenhangskomponente, d.h. aller Knoten der jeweiligen Zusammenhangskomponente. Sofern kein Graphknoten einer Zusammenhangskomponente als Attribut einen Potentialwert aufweist, bleiben die Attribute Potential- und Phasenwerte aller Graphknoten der Zusammenhangskomponente undefiniert. Sofern der Potentialwert und, soweit gegeben, der Phasenwert, von zwei verschiedenen Graphknoten einer Zusammenhangskomponente definiert sind und sich die Potentialwerte oder, soweit gegeben, die Phasenwerte unterscheiden, liegt ein elektrischer Kurzschluss in der Zusammenhangskomponente vor. Der Kurzschluss zwischen diesen beiden Graphknoten wird zusammen mit den Potential- und, soweit vorhanden, den Phasenwerten dieser Graphknoten ausgegeben.

Die jeweiligen Attributwerte zu Potential- und Phasenwerte aller Graphknoten der Zusammenhangskomponente bzw. die Eigenschaft "undefiniert" können ausgegeben werden.

Die Simulation der Schaltlogik erfolgt insbesondere iterativ, d.h. nach einer Modifikation des graphbasierten Schaltplansimulationsmodells erfolgt eine Bestimmung der Zusammenhangskomponenten, dann eine Bestimmung der Potentialwerte der Graphknoten und abhängig von den Potentialwerten wird ein Schaltvorgang durch Hinzufügen oder Löschen von Graphkanten abgebildet, bis sich die Potential- und ggf. Phasenwerte, und somit die von der Schaltlogik abhängenden Zustände der bedingten Graphkanten, nicht mehr ändern.

In anderen Worten, bei der Simulation des Schaltvorgangs werden iterativ Potentialwerte und Phasenwerte der Graphknoten bestimmt und die Schaltlogik ausgeführt bis ein stabiles Potentialniveau erreicht ist. Der resultierende Graph, d.h. das resultierende graphbasierte Schaltplansimulationsmodell, wird ausgegeben.

Um das echte Verhalten des technischen Systems abbilden zu können, wird die Simulation vorzugsweise mit einer realen Steuerung des technischen Systems (Hardware-in-the-Loop), mit einem Modell der Steuerung (Model-in-the-Loop) oder mit einer Kopie der Steuerungssoftware, die jedoch nicht auf der realen Hardware der Steuerung ausgeführt wird (Software-in-the-Loop) gekoppelt. Somit erhält das graphbasierte Schaltplansimulationsmodell die Ausgangssignale der Steuerung und gibt die simulierten Eingangssignale der Steuerung an diese zurück.

Im nächsten Schritt S3 werden für vorgegebene Graphknoten des resultierenden graphbasierten Schaltplansimulationsmodells die iterativ bestimmten Potential- bzw. Phasenwerte als simulierte Ausgangssignale ausgegeben.

Diese simulierten Ausgangssignale werden im nächsten Schritt S4 mit bereitgestellten Referenzausgangssignalen der realen elektrischen Schaltung verglichen. Die Referenzausgangssignale werden vorzugsweise an der fehlerhaften Schaltung gemessen. In anderen Worten, es kann ein fehlerhafter Ist-Zustand der elektrischen Schaltung des technischen Systems mittels einer realen Steuerung gemessen werden. Die gemessenen Ausgangssignale der elektrischen Schaltung können als Referenzausgangssignale bereitgestellt werden.

Wenn die Referenzausgangssignale mit den simulierten Ausgangssignalen zumindest teilweise, d.h. beispielsweise innerhalb eines vorgegebenen Toleranzbereichs, übereinstimmen, wird im Schritt S5 eine Fehlerursache ausgegeben. Die Fehlerursache wird vom jeweilig simulierten Fehler abgeleitet. Beispielsweise kann einem Techniker der Ort und die Ursache "Kabelbruch" oder "Kurzschluss" des Fehlers ausgegeben werden. Wenn die Referenzausgangssignale mit den simulierten Ausgangssignalen nicht übereinstimmen oder die Übereinstimmung außerhalb des vorgegebenen Toleranzbereichs liegt, kann mindestens ein weiterer Fehler simuliert werden, siehe Schritt S6. Die Fehlerursachensuche kann demnach iterativ durchgeführt werden, wobei das graphbasierte Schaltplansimulationsmodell für die Simulation eines weiteren Fehlers entsprechend modifiziert wird. Dabei kann ein Ergebnis der vorhergehenden Simulation beispielsweise Hinweise für die Ableitung des nächsten, zu testenden Fehlers liefern.

Die Fehlerursachensuche wird demnach iterativ durchgeführt bis die simulierten Ausgangssignale mit den Referenzsignalen übereinstimmen. Der graphbasierte Ansatz ermöglicht hierbei eine schnelle Iteration verschiedener Fehlerursachen.

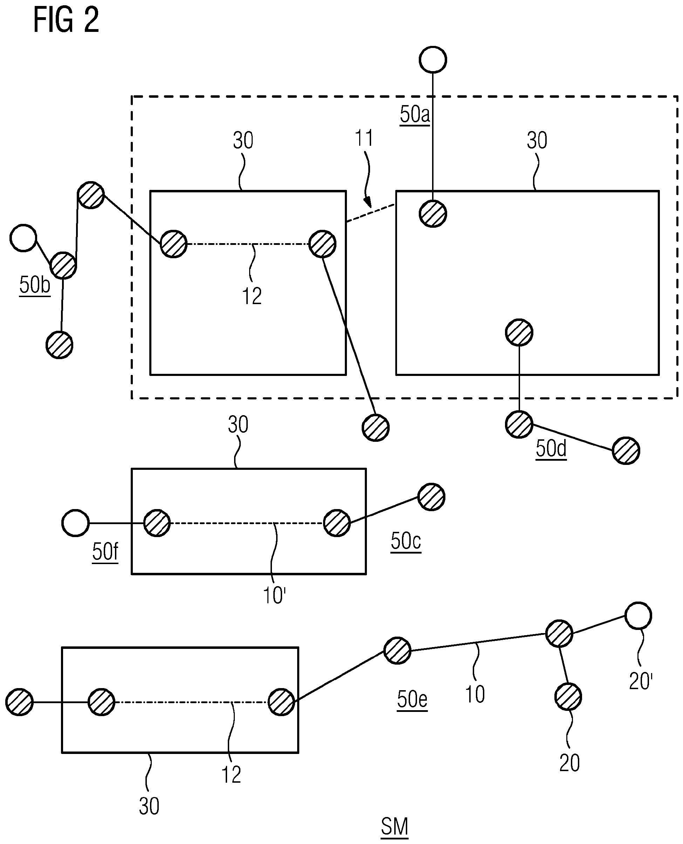

Figur 2 zeigt in schematischer Darstellung eine Visualisierung eines graphbasierten Schaltplansimulationsmodells SM einer elektrischen Schaltung. Die elektrische Schaltung kann insbesondere als ungerichteter Graph abgebildet werden.

Im graphbasierten Schaltplansimulationsmodell SM sind die Schaltlogik, die Schaltkontakte und/oder die Schaltungskomponenten vorzugsweise hierarchisch modelliert. Der Aufbau des graphbasierten Schaltplansimulationsmodells SM ist hier beispielhaft gezeigt. Um die Schaltlogik eines Schaltplans in der computergestützten Simulation abzubilden, können Graphkanten 10 hinzugefügt und/oder gelöscht werden. Beispielsweise kann die Logik eines Schalters durch das Hinzufügen oder Löschen mindestens einer Graphkante 10 modelliert werden.

Die elektrischen Anschlusspunkte von Schaltungskomponenten sind als Graphknoten 20 und elektrische Verbindungen, wie z.B. Kabel oder Leiterbahnen, als Graphkanten 10 modelliert. Graphknoten 20 können vom Typ Quelle 20' (engl. Source), Zweig (engl. Branch) oder Schnittstelle (engl. Port) sein. Einem Graphknoten 20 kann als Attribut einen Potential- und Phasenwert zugeordnet sein. Die Quellen 20' können insbesondere den Potential- und/oder Phasenwert festlegen.

Mit den Graphkanten 10 werden physikalische bzw. elektrische Verbindungen zwischen den Graphknoten 20 modelliert. Demnach haben Graphknoten 20, die durch eine Graphkante 10 verbunden sind, denselben Phasen- und Potentialwert. Graphkanten 10 können insbesondere als bedingte Graphkanten 12 abhängig von einer Schaltungskomponente modelliert sein. Graphkanten 10 können hinzugefügt oder entfernt werden. Es ist eine Graphkante 10' gezeigt, die beispielsweise entfernt werden kann, um einen Fehler zu simulieren.

Graphknoten 20 und Graphkanten 10, 12 können gruppiert werden, um elektrische Schaltungskomponenten 30, wie z.B. eine Schützspule oder einen Schaltkontakt, abzubilden. Eine elektrische Schaltungskomponente 30 kann insbesondere mehr als eine der Zusammenhangskomponenten 50a,..., 50f umfassen. Die Zusammenhangskomponenten 50a, ..., 50f sind jeweils eine verbundene Menge von Graphknoten 20 mit einem Potential- und Phasenwert. Eine Zusammenhangskomponente 50a, ..., 50f kann insbesondere durch den Union-Find-Algorithmus nach Robert Endre Tarjan bestimmt werden.

Somit bildet eine elektrische Schaltungskomponente 30 eine übergeordnete Ebene im Schaltplansimulationsmodell. Die elektrische Schaltungskomponenten 30 können über eine logische Verbindung 11 miteinander verbunden sein. Eine solche logische Verbindung 11 wird insbesondere nicht durch eine Graphkante abgebildet.

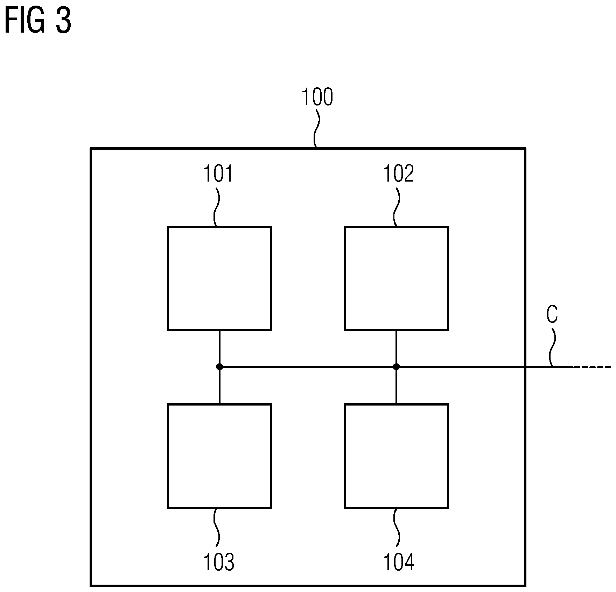

Figur 3 zeigt eine schematische Darstellung einer Vorrichtung 100 zur Fehlerursachenbestimmung eines Fehlers in einer elektrischen Schaltung. Die Vorrichtung umfasst mindestens einen Prozessor 101 und ist derart eingerichtet, die Schritte eines Verfahrens zur Fehlerursachenbestimmung eines Fehlers in einer elektrischen Schaltung, wie beispielhaft anhand Figur 1 beschrieben, auszuführen. Die Vorrichtung 100 kann außerdem ein Simulationsmodul 102 umfassen, das derart eingerichtet ist, einen Fehler in der elektrischen Schaltung mittels eines eingelesenen graphbasierten Schaltplansimulationsmodells zu simulieren. Außerdem kann die Vorrichtung 100 ein Analysemodul 103 umfassen, das derart eingerichtet ist, einen Vergleich der simulierten Ausgangssignale mit bereitgestellten Referenzausgangssignalen der elektrischen Schaltung zur Fehlerursachenbestimmung durchzuführen. Abhängig vom Vergleichsergebnis kann die dadurch ermittelte Fehlerursache beispielsweise über ein Ausgabemodul 104 ausgegeben werden. Die Vorrichtung 100 kann mit einer realen Steuerung über eine Verbindung C gekoppelt sein, so dass beispielsweise eine Hardware-in-the-Loop-Simulation durchgeführt werden kann. Die Erfindung ist durch die beigefügten Ansprüchen definiert.

## Patentansprüche

1. Computerimplementiertes Verfahren zur Fehlerursachenbestimmung eines Fehlers in einer elektrischen Schaltung, umfassend die Verfahrensschritte:
a) Einlesen (S1) eines graphbasierten Schaltplansimulationsmodells (SM) der elektrischen Schaltung, wobei im graphbasierten Schaltplansimulationsmodell elektrische Anschlusspunkte von Schaltungskomponenten als Graphknoten (20) und elektrische Verbindungen als Graphkanten (10) modelliert sind,
b) Simulieren (S2) eines Fehlers in der elektrischen Schaltung mittels des graphbasierten Schaltplansimulationsmodells, wobei
- eine Graphkante im graphbasierten Schaltplansimulationsmodell hinzugefügt oder entfernt wird,
- resultierende Zusammenhangskomponenten anhand des modifizierten graphbasierten Schaltplansimulationsmodells und jeweilige Potentialwerte und/oder Phasenwerte der Graphknoten der resultierenden Zusammenhangskomponenten ermittelt werden,
- und wobei auf Basis der ermittelten Potentialwerte und/oder Phasenwerte der Graphknoten das Schaltverhalten der elektrischen Schaltung durch weiteres Hinzufügen und/oder Entfernen von mindestens einer weiteren Graphkante abgebildet wird,
c) Ausgeben (S3) von resultierenden Potential- und/oder Phasenwerten vorgegebener Graphknoten als simulierte Ausgangssignale,
d) Vergleichen (S4) der simulierten Ausgangssignale mit bereitgestellten Referenzausgangssignalen der elektrischen Schaltung
und
e) Ausgeben (S5) der den Fehler entsprechenden Fehlerursache, wenn die simulierten Ausgangssignale mit den Referenzausgangssignalen übereinstimmen.

2. Computerimplementiertes Verfahren nach Anspruch 1, wobei, wenn die simulierten Ausgangssignale von den Referenzausgangssignalen abweichen, iterativ weitere Fehler simuliert werden bis die simulierten Ausgangssignale mit den Referenzausgangssignalen übereinstimmen.

3. Computerimplementiertes Verfahren nach einem der vorhergehenden Ansprüche, wobei einer Graphkante (10) und/oder einem Graphknoten (20) mindestens ein Attribut zugeordnet wird.

4. Computerimplementiertes Verfahren nach einem der vorhergehenden Ansprüche, wobei eine Zusammenhangskomponente (50a, ..., 50f) mittels eines Union-Find-Algorithmus ermittelt wird.

5. Computerimplementiertes Verfahren nach einem der vorhergehenden Ansprüche, wobei die Attribute zu Potential- und Phasenwerten weiterer Graphknoten einer Zusammenhangskomponente auf Basis eines Attributs eines Graphknotens der entsprechenden Zusammenhangskomponente ermittelt werden.

6. Computerimplementiertes Verfahren nach einem der vorhergehenden Ansprüche, wobei ein jeweiliger Ausgangspotentialwert des eingelesenen graphbasierten Schaltplansimulationsmodells auf Basis eines gemessenen Eingangssignals der elektrischen Schaltung in einem vorgegebenen Normalzustand der elektrischen Schaltung eingestellt wird.

7. Computerimplementiertes Verfahren nach einem der vorhergehenden Ansprüche, wobei die Schaltlogik, die Schaltkontakte und/oder die Schaltungskomponenten der elektrischen Schaltung im graphbasierten Schaltplansimulationsmodell hierarchisch modelliert werden.

8. Vorrichtung (100) zur Fehlerursachenbestimmung eines Fehlers in einer elektrischen Schaltung, umfassend mindestens einen Prozessor (101), wobei die Vorrichtung derart eingerichtet ist, die Schritte des Verfahrens nach einem der Ansprüche 1 bis 7 durchzuführen.

9. Vorrichtung (100) nach Anspruch 8, die mit einer realen oder simulierten Steuerung gekoppelt ist, wobei die Ausgangssignale der Simulation an die reale oder simulierte Steuerung übermittelt werden.

10. Computerprogrammprodukt umfassend Programmcodeteile, die bei der Ausführung des Programms durch einen Prozessor diesen veranlassen, die Schritte des Verfahrens nach einem der Ansprüche 1 bis 7 auszuführen.

## Claims

1. Computer-implemented method for determining the cause of a fault in an electrical circuit, comprising the following process steps:
a) inputting (S1) of a graph-based circuit diagram simulation model (SM) of the electrical circuit, wherein, in the graph-based circuit diagram simulation model, electrical connection points of circuit components are modelled as graph vertices (20) and electrical connections are modelled as graph edges (10),
b) simulation (S2) of a fault in the electrical circuit by means of the graph-based circuit diagram simulation model, wherein
- one graph edge in the graph-based circuit diagram simulation model is added or removed,
- resulting connected components, and respective potential values and/or phase values of the graph vertices of the resulting connected components, are determined by reference to the modified graph-based circuit diagram simulation model,
- and wherein, on the basis of the potential values and/or phase values of the graph vertices thus determined, the switching behavior of the electrical circuit is represented by the further addition and/or removal of at least one further graph edge,
c) outputting (S3) of resulting potential and/or phase values for specified graph vertices in the form of simulated output signals,
d) comparison (S4) of the simulated output signals with reference output signals supplied for the electrical circuit, and
e) outputting (S5) of the cause of the fault corresponding to said fault, if the simulated output signals coincide with the reference output signals.

2. Computer-implemented method according to Claim 1, wherein, if the simulated output signals differ from the reference output signals, further faults are simulated in an iterative manner, until the simulated output signals coincide with the reference output signals.

3. Computer-implemented method according to one of the preceding claims, wherein at least one attribute is assigned to one graph edge (10) and/or to one graph vertex (20).

4. Computer-implemented method according to one of the preceding claims, wherein a connected component (50a, ..., 50f) is determined by means of a union-find algorithm.

5. Computer-implemented method according to one of the preceding claims, wherein the attributes for potential and phase values of further graph vertices of a connected component are determined on the basis of one attribute of a graph vertex of the corresponding connected component.

6. Computer-implemented method according to one of the preceding claims, wherein a respective output potential value of the inputted graph-based circuit diagram simulation model is set on the basis of a measured input signal of the electrical circuit in a predefined normal state of said electrical circuit.

7. Computer-implemented method according to one of the preceding claims, wherein the switching logic, the switching contacts and/or the circuit components of the electrical circuit are hierarchically modelled in the graph-based circuit diagram simulation model.

8. Device (100) for determining the cause of a fault in an electrical circuit, comprising at least one processor (101), wherein the device is designed to execute the steps of the method according to one of Claims 1 to 7.

9. Device (100) according to Claim 8, which is coupled to an actual or a simulated controller, wherein the simulation output signals are transmitted to the actual or the simulated controller.

10. Computer program product, comprising program code elements which, during the running of the program by a processor, initiate the execution by the latter of the steps of the method according to one of Claims 1 to 7.

## Revendications

1. Procédé mis en œuvre par ordinateur de détermination des causes d'une défaillance dans un circuit électrique, comprenant les stades de procédé :
a) on entre (S1) un modèle (SM) de simulation de schéma de montage reposant sur un graphe du circuit électrique, dans lequel, dans le modèle de simulation d'un schéma de montage reposant sur un graphe, des points de connexion de composants du circuit sont modélisés sous la forme de nœuds (20) du graphe et des liaisons électriques sous la forme d'arcs (10) de graphe,
b) on simule (S2) une défaillance du circuit électrique au moyen du modèle de simulation de schéma de montage reposant sur un graphe, dans lequel
- on ajoute ou on retire un arc du graphe dans le modèle de simulation d'un schéma de montage reposant sur un graphe,
- on détermine des composants de relation résultants à l'aide du modèle modifié de simulation d'un schéma de montage reposant sur un graphe et des valeurs de potentiel et/ou des valeurs de phase respectives des nœuds de graphe des composants de relation résultants,
- et dans lequel, sur la base des valeurs de potentiel ou des valeurs de phase déterminées des nœuds du graphe, on reproduit le comportement de coupure du circuit électrique en continuant à ajouter et/ou à retirer au moins un autre arc du graphe,
c) on émet (S3) des valeurs résultants de potentiel et/ou de phase de nœuds du graphe données à l'avance sous la forme de signaux de sortie simulés,
d) on compare (S4) les signaux de sortie simulés à des signaux de sortie de référence du circuit électrique, dont on dispose
et
e) on émet (S5) la cause de la défaillance correspondant à la défaillance si les signaux de sortie simulés coïncident avec les signaux de sortie de référence.

2. Procédé mis en œuvre par ordinateur suivant la revendication 1, dans lequel, si les signaux de sortie simulés s'écartent des signaux de sortie de référence, on continue à simuler itérativement des défaillances jusqu'à ce que les signaux de sortie simulés coïncident avec les signaux de sortie de référence.

3. Procédé mis en œuvre par ordinateur suivant l'une des revendications précédentes, dans lequel on affecte au moins un attribut à un arbre (10) de graphe ou à un nœud (20) de graphe.

4. Procédé mis en œuvre par ordinateur suivant l'une des revendications précédentes, dans lequel on détermine un composant (50a, ..., 50f) de relation au moyen d'un algorithme union find.

5. Procédé mis en œuvre par ordinateur suivant l'une des revendications précédentes, dans lequel on détermine les attributs par rapport à des valeurs de potentiel et de phase d'autres nœuds du graphe d'un composant de relation sur la base d'un attribut d'un nœud du graphe du composant de relation correspondant.

6. Procédé mis en œuvre par ordinateur suivant l'une des revendications précédentes, dans lequel on établit, dans un état normal donné à l'avance du circuit électrique, une valeur respective de potentiel de sortie du modèle de simulation de schéma de montage reposant sur un graphe, qui a été entré, sur la base d'un signal d'entrée mesuré du circuit électrique.

7. Procédé mis en œuvre par ordinateur suivant l'une des revendications précédentes, dans lequel on modélise hiérarchiquement la logique de montage, les contacts de montage et/ou les composants du circuit électrique, dans le modèle de simulation d'un schéma de montage reposant sur un graphe.

8. Dispositif (100) de détermination des causes d'une défaillance d'un circuit électrique, comprenant au moins un processeur (101), le dispositif étant conçu de manière à effectuer les stades du procédé suivant l'une des revendications 1 à 7.

9. Dispositif (100) suivant la revendication 8, qui est couplé à une commande réelle ou simulée, les signaux de sortie de la simulation étant transmis à la commande réelle ou simulée.

10. Produit de programme d'ordinateur comprenant des parties de codes de programme, qui font que, lorsque le programme est réalisé par un processeur, celui-ci exécute les stades du procédé suivant l'une des revendications 1 à 7.
